# EUROPÄISCHE PATENTANMELDUNG

(11) **EP 4 190 428 A1**
(43) Veröffentlichungstag der Anmeldung: **07.06.2023**
(21) Anmeldenummer: 22206579.9
(22) Anmeldetag: 10.11.2022
(51) Int. Cl.: B01D 53/04

(54) **CO2-ADSORPTIONSMODUL FÜR EINE CO2-ADSORPTIONSVORRICHTUNG ZUM TRENNEN VON CO2 (KOHLENSTOFFDIOXID) AUS LUFT**

(30) Priorität: 06.12.2021 DE 102021213820
(71) Anmelder: Robert Bosch GmbH, 70442 Stuttgart (DE)
(72) Erfinder: Bauer, Harald, 71139 Ehningen (DE)

(57) **Zusammenfassung**

Es wird ein CO2-Adsorptionsmodul (30) vorgeschlagen für eine CO2-Adsorptionsvorrichtung zum Trennen von CO2 aus einem, insbesondere mittels einer Ventilatoreinheit, zugeführten Luftstrom mittels eines zyklisch durchführbaren Adsorptions-Desorptions-Vorgangs, mit einem luftdurchlässigen CO2-Adorptionskörper (34) aufweisend ein Adsorbens zur Adsorption des CO2 aus dem zugeführten Luftstrom und einem luftdurchlässigen Erwärmungskörper (36) zum Erwärmen des luftdurchlässigen CO2-Adorptionskörpers (34) zur Desorption des adsorbierten CO2, wobei der luftdurchlässige Erwärmungskörper (36) elektrisch beheizbar ausgebildet ist und hierfür entsprechende elektrische Anschlüsse (38) aufweist.

## Beschreibung

### Stand der Technik

Die Erfindung betrifft ein CO2-Adsorptionsmodul für eine CO2-Adsorptionsvorrichtung zum Trennen von CO2 (Kohlenstoffdioxid) aus einem, insbesondere mittels einer Ventilatoreinheit, zugeführten Luftstrom mittels eines zyklisch durchführbaren Adsorptions-Desorptions-Vorgangs, mit einem luftdurchlässigen CO2-Adorptionskörper aufweisend ein Adsorbens zur Adsorption des CO2 aus dem zugeführten Luftstrom und einem luftdurchlässigen Erwärmungskörper zum Erwärmen des luftdurchlässigen CO2-Adorptionskörpers zur Desorption des adsorbierten CO2.

Die Erfindung betrifft ferner eine CO2-Adsorptionsvorrichtung zum Trennen von CO2 (Kohlenstoffdioxid) aus einem, insbesondere mittels einer Ventilatoreinheit, zugeführten Luftstrom mittels einer zyklisch durchführbaren Adsorptions-Desorptions-Vorgangs, mit einer Modulträgereinheit zum Befestigen zumindest eines ein Adsorbens zur Adsorption des CO2 aufweisenden und zur Desorption beheizbaren CO2-Adsorptionsmoduls.

Die Erfindung betrifft außerdem ein Verfahren zum Trennen von CO2 (Kohlenstoffdioxid) aus einem, insbesondere mittels einer Ventilatoreinheit, zugeführten Luftstrom mittels eines ein Adsorbens zur Adsorption des CO2 aufweisenden und zur Desorption beheizbaren CO2-Adsorptionsmoduls, wobei ein Adsorptions-Desorptions-Vorgang zyklisch durchgeführt wird.

Um die Erwärmung der Erdatmosphäre zu begrenzen wird diskutiert den durch die Industrialisierung gestiegenen CO2-Gehalt aktiv zu reduzieren. Hierzu können auch sogenannte "direct air capture" systeme (DAC) zum Einsatz kommen, die in einer ersten Anlage CO2 aus der Umgebungsluft im Freien oder über das Lüftungssystem in z.B. Gebäuden CO2 aktiv entfernen und aufkonzentrieren, so dass das CO2 im Anschluss in einer zweiten dauerhaft, z.B. durch verpressen in geologische Kavitäten, gebunden werden kann.

Die WO 2014/170184 A1 und die WO 2015/185434 A1 offenbaren eine derartige erste Anlage, bei der CO2 aus der Luft in einer ersten Anlage in einem ersten Schritt durch Fördern mittels Ventilator an ein Adsorbermedium temporär gebunden wird (Adsorption), so dass in einem zweiten Schritt nach Verschließen der Einheit gegen die Umgebung das CO2 vom Adsorbermedium wieder entfernt und über Rohrleitungen der zweiten Anlage zugeführt werden kann (Desorption). Hierbei wird die Adsorption wie einem Fachmann geläufig ist bei anderen physikalischen Bedingungen durchgeführt wie die Desorption. Das heißt adsorbiert wird z.B. bei 25°C, 1013 mbar und einer relativen Feuchte von 50%RF, desorbiert bei 80°C und 200 mbar.

Um die Desorption bei erhöhter Temperatur am Adsorbens durchführen zu können, muss das Adsorbens beheizt werden. Die Adsorbentien degenerieren bei erhöhter Temperatur, so dass anschließend alles wieder schnell heruntergekühlt werden sollte.

Eine kostengünstige Beheizung kann zwar z.B. mittels vorhandener Wärmeströme erfolgen, die von benachbarten Anlagen mit der ersten Anlage mittels fluidleitender Temperierleitungen gekoppelt werden, nachteilig ist aber, dass hierfür Wärmetauscher, Pumpen, Ventile, Sensorik und Rohrleitungen eingesetzt werden müssen und die Beheizung des Adsorbens mittels eines z.B. Heizschlangenregisters erfolgen muss (das Adsorbens wird um die Heizschlangen herum angeordnet), so dass diese Einrichtungen hohe Investkosten erfordern, vor allem aber eine hohe Wärmekapazität (Gewicht des verwendeten Edelstahls für Rohre etc.) aufweisen.

Da das Adsorbens erst nach der Abkühlung wieder CO2 aufnehmen kann, muss das System nach der Desorption für einen effektiven Betrieb wieder auf nahezu Umgebungstemperatur gekühlt werden. Ein Kühlen mit Umgebungsluft dauert bei bekannten Systemen durch die hohe Wärmekapazität vergleichsweise lange, so dass das Adsorbens zudem unnötig degeneriert. Ein aktives Kühlen muss das oben beschriebene Heizsystem mit Kühlwasser wieder herunterkühlen und erfordert weitere Pumpen und Wärmetauscher usw., so dass das Gesamtsystem der ersten Anlage komplexer und damit auch weniger autark wird.

Mittels einer Wärmepumpe kann die benötigte externe thermische Energie auf hohem Temperaturniveau zur Desorption und/oder auf niedrigem Temperaturniveau zur Kühlung zwar deutlich reduziert werden, jedoch verlagert sich der Energiebedarf dann auf einen elektrischen Energiebedarf für die Wärmepumpe, wohingegen Aufwand und Kosten für Verrohrung, Ventile, Pumpen und Wärmetauscher eher noch größer werden.

Wird ein Wechsel des Adsorbens in einer Anlage gemäß den vorangehend erwähnten Druckschriften nötig, muss das Wärmeträgerfluid aus dem fluidbeheizten Register (Heizschlangen) entleert werden. Dann werden die Leitungen getrennt, das Register entnommen, der Adsorber getauscht, das Register wieder eingebaut und die Fluidanschlüsse wieder verbunden. Schlussendlich müssen die Fluidleitungen auf Dichtigkeit geprüft werden, bevor das System wieder gefüllt werden kann. Prognostizierte Systeme bestehen aus >>1000 ersten Anlagen mit jeweils >10 Trägern, die regelmäßig zu erneuern sind.

### Offenbarung der Erfindung

Gegenstand der vorliegenden Erfindung ist ein CO2-Adsorptionsmodul für eine CO2-Adsorptionsvorrichtung zum Trennen von CO2 gemäß dem unabhängigen Anspruch 1, wobei der luftdurchlässige Erwärmungskörper elektrisch beheizbar ausgebildet ist und hierfür entsprechende elektrische Anschlüsse aufweist.

Gegenstand der vorliegenden Erfindung ist ferner eine CO2-Adsorptionsvorrichtung zum Trennen von CO2 gemäß dem unabhängigen Anspruch 10, wobei die Modulträgereinheit elektrische Gegenanschlüsse für zumindest ein elektrisch beheizbares CO2-Adsorptionsmodul aufweist und mit einer elektrischen Energiequelle bzw. Stromversorgungseinheit koppelbar ist, um das zumindest eine elektrisch beheizbare CO2-Adsorptionsmodul elektrisch zu beheizen.

Gegenstand der vorliegenden Erfindung ist außerdem ein Verfahren zum Trennen von CO2 gemäß dem unabhängigen Anspruch 13, wobei das CO2-Adsorptionsmodul elektrisch beheizt wird.

Die grundsätzliche Funktionsweise des CO2-Adsorptionsmoduls kann analog zu der Vorrichtung gemäß der einleitend beschriebenen WO 2014/170184 A1 erfolgen.

Das CO2-Adsorptionsmodul ist für den Einsatz in einer CO2-Adsorptionsvorrichtung ausgebildet bzw. eingerichtet, um CO2 mittels eines zyklisch durchführbaren bzw. durchgeführten Adsorptions-Desorptions-Vorgang aus einem Luftstrom bzw. der Luft zu trennen. Hierfür weist das CO2-Adsorptionsmodul zum einen einen luftdurchlässigen CO2-Adorptionskörper mit einem entsprechend funktionalisierten Adsorbens zur Adsorption, d.h. zur Bindung/Filterung des CO2 auf. Der CO2-Adorptionskörper kann das Adsorbens aufweisen oder daraus bestehen. Der CO2-Adsorptionskörper kann bspw. faserförmig und/oder pulverförmig und/oder pelletförmig ausgebildet sein. Demnach kann der CO2-Adsorptionskörper als Fasermatte/-tuch oder Vliesmatte/-tuch oder loses Pulver oder lose Pellets ausgebildet sein.

Das Adsorbens weist hierbei eine CO2-bindende Eigenschaft auf. Das Adsorbens kann auf eine dem Fachmann bekannte Art und Weise hergestellt sein. Demnach kann das Adsorbens an sich eine CO2-bindende Eigenschaft aufweisen. Alternativ oder zusätzlich kann das Adsorbens zur Erzielung der CO2-bindenden Eigenschaft entsprechend beschichtet, imprägniert oder funktionalisiert sein. Hierbei kann das Adsorbens bspw. einen faserförmigen oder vliesförmig oder porösen Feststoff als Trägerstruktur mit einem Grundmaterial aufweisen oder daraus bestehen, welches ausgewählt ist aus zumindest einem Material der folgenden Gruppe: Harze, Polymere, Keramiken, Zeolithe, Silicate, metallorganische Verbindungen, organische Materialien wie Cellulose oder Aktivkohle. Das Grundmaterial kann wiederum mit Aminen, Kaliumcarbonat oder anderen Komponenten, die ausgebildet sind, CO2 chemisch oder physikalisch zu binden, spezifisch funktionalisiert sein.

Zum anderen weist das CO2-Adsorptionsmodul einem luftdurchlässigen Erwärmungskörper zum Erwärmen des luftdurchlässigen CO2-Adorptionskörpers zur Desorption, d.h. zur Freisetzung des adsorbierten CO2 auf. Erfindungsgemäß ist der luftdurchlässige Erwärmungskörper elektrisch beheizbar ausgebildet und weist hierfür entsprechende elektrische Anschlüsse auf.

Die erfindungsgemäße elektrische Beheizbarkeit des Erwärmungskörpers bietet eine Vielzahl von Vorteilen gegenüber den fluidleitenden bzw. wasserleitenden Temperierleitungen gemäß dem einleitend beschriebenen Stand der Technik.

Zum einen bietet der elektrisch beheizbare Erwärmungskörper ein wesentlich dynamischeres Temperaturprofil, da Teile bzw. Körper mit einer hohen Wärmekapazität, wie bspw. das Wasser, robuste Leitungen, Anschlussstutzen, T-Stücke, ggf. Wärmetauscher, entfallen, sodass sich der elektrisch beheizbare Erwärmungskörper schneller erwärmen und wieder abkühlen kann. Insbesondere ist eine bereits vorhandene Ventilatoreinheit ausreichend, um den Adsorptionskörper schnell herunterzukühlen, da keine großen Wärmekapazitäten dämpfend wirken. Dies ermöglicht die gewünschten schnelleren Wechsel zwischen Desorption und Adsorption, wodurch die gesamte Effizienz gesteigert und der Energiebedarf reduziert werden kann.

Zum anderen sinkt auch die Komplexität der CO2-Adsorptionsvorrichtung erheblich, da keine Wärmetauscher notwendig sind und ggf. auch kein Bedarf für eine aktive Kühlung nach einer thermischen Desorption, z.B. in gemäßigten Klimazonen besteht. Damit ergibt sich auch ein geringerer Wartungsaufwand sowie eine bessere Eignung zur autarken Aufstellung mit geringem Betreuungsaufwand.

Der Strombedarf für die Desorptionsphase ist durch die reduzierte dämpfende Masse vergleichbar mit dem Bedarf einer Wärmepumpe, die ein Wärmeträgerfluid für die Desorptionsphase beheizt.

Der luftdurchlässige elektrische beheizbare Erwärmungskörper ist fest ausgebildet, wobei er aufgrund seiner Struktur (Öffnungen, Beschaffenheit etc.) ferner luftdurchlässig ausgebildet ist.

Es ist vorteilhaft, wenn der luftdurchlässige Erwärmungskörper zur elektrischen Beheizbarkeit ein elektrisch leitfähiges Polymer (heat inducing thermoplastics, HiT) oder ein elektrisch leitfähiges Polymerverbundmaterial aufweist. Hierbei kann das elektrisch leitfähige Polymerverbundmaterial ein Polymer, insbesondere ein elektrisch nichtleitendes Polymer, und elektrisch leitfähige Partikel aufweisen.

Ein elektrisch leitfähiges Polymer bzw. Polymerverbundmaterial kann Strom leiten, weist aber einen hohen elektrischen Widerstand auf. Wegen dem hohen elektrischen Widerstand wird das elektrisch leitfähige Polymer bzw. Polymerverbundmaterial bei Beaufschlagung mit Strom erwärmt. Geeignete Polymere für das Polymerverbundmaterial sind bspw. Polyethylen (PE), insbesondere Hart-Polyethylen (HDPE), Polypropylen (PP, PPs), Polyphenylensulfid (PPS) und Polyvinylidenfluorid (PVDF).

Die elektrisch leitfähige Partikel können dem (elektrisch nichtleitenden) Polymer des Polymerverbundmaterials einfach zugemischt werden, um die schwach elektrisch leitfähigen Eigenschaften in dem Polymer, das ansonsten elektrisch isolierende Eigenschaften aufweist bereitzustellen. Als elektrisch leitfähige Partikel können bspw. Graphitpartikel und/oder Ruße und/oder metallische Partikel eingesetzt werden. Der Anteil der elektrisch leitfähigen Partikel wird dabei bevorzugt so gewählt, dass zwar eine elektrische Leitfähigkeit in dem Polymerverbundmaterial ausgebildet wird, der elektrische Widerstand aber sehr hoch ist. Ein solches beheizbares Polymerverbundmaterial kann eine Flächenleistungsdichte von ca. 2 bis 3 Watt/cm² bereitstellen. Erzielbare Temperaturen des Polymerverbundmaterials betragen bis zu 200°C, wobei dies abhängig von dem eingesetzten Polymer als Grundmaterial ist. Temperaturen um 200°C bilden eine Grenze für die erzielbare Temperatur, da die elektrische Leitfähigkeit in dem Polymerverbundmaterial mit Zunahme der Temperatur abnimmt, sodass ein selbstregulierender Effekt gegeben ist.

Das elektrisch leitfähige Polymer bzw. das Polymerverbundmaterial eignet sich für den Erwärmungskörper sehr gut, da es sich aufgrund des hohen elektrischen Widerstands schnell erwärmt und aufgrund der geringe Wärmekapazität wieder schnell abkühlt sowie ferner robust ist und eine gute chemische Beständigkeit aufweist.

Es ist ferner vorteilhaft, wenn der luftdurchlässige Erwärmungskörper an seiner Oberfläche, insbesondere aufgrund des elektrisch nichtleitenden Polymers oder einer isolierenden Außenschicht, elektrisch isolierend ausgebildet ist. Hierbei ist es vorteilhaft, wenn die elektrischen Anschlüsse durch definiertes Entfernen des partikelfreien und damit elektrisch nichtleitenden Polymers an der Oberfläche bis zum Freilegen der elektrisch leitfähigen Partikel oder der isolierenden Außenschicht realisiert sind.

Die elektrisch isolierende Außenschicht kann einen Kunststoff umfassen oder darauf bestehen. Als Kunststoff kann hier bspw. Polypropylen oder ein anderer Kunststoff mit elektrisch isolierenden Eigenschaften gewählt werden. Die elektrisch isolierende Außenschicht kann bspw. als eine Folie oder ein Folienverbund ausgebildet sein.

Die elektrisch isolierende Außenschicht und die innere beheizbare Trägerstruktur des Erwärmungskörpers können stoffschlüssig miteinander verbunden sein. Der Stoffverbund kann sich selbsttätig bei der Herstellung einstellen, wenn sich bspw. wie bei Extrusionsprozessen an der Polymeroberfläche eine partikelfreie Randschicht ausbildet. Der Stoffverbund kann aber auch durch Herstellen einzelner Lagen und anschließendes Laminieren, Tiefziehen, Zuschneiden und/oder Stanzen sowie Anbringen der elektrischen Anschlüsse mit bekannten Fertigungstechniken der Folienindustrie Rolle zu Rolle realisiert werden.

Auch kann die elektrisch isolierende Außenschicht oder die innere beheizbare Trägerstruktur des Erwärmungskörpers an die jeweils andere mittels Spritzgießens separat angespritzt oder mittels eines Klebstoffes angeklebt sein. Sowohl die elektrisch isolierende Außenschicht als auch die innere beheizbare Trägerstruktur können, insbesondere gemeinsam, kostengünstig im Spritzgussverfahren hergestellt werden.

Das Entfernen kann bspw. mittels Fräsen oder Bohren erfolgen, sodass insbesondere bei einem Polymerverbundmaterial, welches aufgrund des elektrisch nichtleitenden Polymers an seiner Oberfläche isolierend ausgebildet ist, auf sehr einfache Art und Weise die innenliegenden elektrisch leitfähigen Partikel freigelegt und dadurch elektrische Anschlüsse bereitgestellt werden können. Hierbei ist es besonders vorteilhaft, wenn die elektrischen Anschlüsse mittels Hochgeschwindigkeitspulverspritzen auf die Oberfläche des Erwärmungskörpers aufgebracht werden, da hierdurch Metallpulver mit hoher Geschwindigkeit die partikelfreie und damit elektrisch nichtleitende Oberfläche des Polymers durchdringt, sodass zusätzlich zum Freilegen der innenliegenden elektrisch leitfähigen Partikel gleichzeitig diese kontaktierende metallische Oberflächen als elektrische Anschlüsse ausgebildet werden.

Die elektrischen Anschlüsse können als Stromfahnen oder Stromschienen ausgebildet sein. Eine Stromfahne kann bspw. ein schmales, dünnes und längliches Metallelement sein. Eine Stromschiene kann demgegenüber ein schmales, starkes bzw. dickes und längliches Metallelement sein. Ein elektrischer Anschluss kann sich entlang einer Länge, insbesondere zumindest 20% und ferner insbesondere zumindest 40% einer Gesamtlänge des elektrisch beheizbaren Erwärmungskörpers, insbesondere an der längeren Seite angeordnet sein, so dass der Strom zur Beheizung möglichst geringe Strecken im beheizbaren Polymer zurücklegen muss. Möglich ist es auch, mehrere elektrische Anschlüsse parallel zueinander entlang der Längsseite des elektrisch beheizbaren Erwärmungskörpers anzuordnen oder Kontaktelemente in der Fläche vorzusehen, die außerhalb des elektrisch beheizbaren Erwärmungskörpers oder mittels des zuvor beschriebenen Pulverspritzprozesses metallisch leitend und damit mit geringem Widerstand verbunden werden. Diese Ausführung gleicht einer elektrischen Kontaktierung von Leiterplatten an deren Schmalseite (sogenannter Messerkontakt) über lange flache Steckerleisten.

Durch diese Maßnahme wird eine gleichmäßige Stromverteilung entlang des elektrisch beheizbaren Erwärmungskörpers erreicht, um möglichst den gesamten Körper aufzuheizen. Dies ermöglicht es, dass der Erwärmungskörper trotz des hohen elektrischen Widerstandes gleichmäßig aufgeheizt wird. Das elektrische Kontaktelement kann an einem Längsende des Erwärmungskörpers angeordnet sein. Dadurch kann das elektrische Kontaktelement auf einfache Art und Weise außerhalb der Trägerstruktur elektrisch mit einer elektrischen Energiequelle bzw. Stromversorgungseinheit elektrisch verbunden werden.

Des Weiteren ist es vorteilhaft, wenn die elektrischen Anschlüsse ferner zur mechanischen Fixierung des CO2-Adsorptionsmoduls an der CO2-Adsorptionsvorrichtung ausgebildet sind. Hierbei sind die elektrischen Anschlüsse bevorzugt als steckbare Anschlüsse bzw. Stecker ausgebildet, wobei insbesondere das Einschieben der Stecker bzw. deren Verriegelung gleichermaßen den Erwärmungskörper mit dem Adsorptionskörper fixiert. Diese Maßnahme vereinfacht erheblich die Montage und den Wechsel des CO2-Adsorptionsmoduls, da nur einfache und schnelle mechanische Arbeiten notwendig sein.

Vorteilhafterweise kann der luftdurchlässige Erwärmungskörper ferner als Trägerstruktur des luftdurchlässigen CO2-Adorptionskörpers ausgebildet sein, wobei der luftdurchlässige CO2-Adorptionskörper an oder in dem luftdurchlässigen Erwärmungskörper angeordnet, insbesondere befestigt ist.

Ferner kann der luftdurchlässige Erwärmungskörper plattenförmig ausgebildet sein. Hierbei ist es vorteilhaft, wenn der luftdurchlässige Erwärmungskörper einen Plattenkörper aufweist, an oder um der luftdurchlässige CO2-Adorptionskörper angeordnet ist, oder zwei zueinander beabstandete Plattenkörper aufweist, zwischen denen der luftdurchlässige CO2-Adorptionskörper angeordnet ist. Der Plattenkörper ist bevorzugt luftdurchlässig ausgebildet. Hierbei kann der Plattenkörper bzw. können die Plattenkörper zur Luftdurchlässigkeit gitterförmig, d.h. als Gitter, oder lochblechförmig, d.h. als Lochblech, oder perforiert ausgebildet sein. Der Plattenkörper bzw. die Plattenkörper können jedoch auch luftundurchlässig ausgebildet sein. Der CO2-Adsorptionskörper kann hierbei bspw. lose in Form von Fasern, Pulver, Pellets etc. ausgebildet und folglich gekammert zwischen den beiden zueinander beabstandeten Plattenkörpern eingeschlossen sein. Außerdem ist es vorteilhaft, wenn der Erwärmungskörper zur Luftdurchlässigkeit gitterförmig, d.h. als Gitter, oder lochblechförmig, d.h. als Lochblech, oder perforiert ausgebildet ist. Hierdurch ist ein deutlich vereinfachter Tausch des Adsorptionkörpers, bspw. nach 2-3 Jahren Standzeit möglich.

Vorteilhafterweise ist der CO2-Adorptionskörper im Wesentlichen vor dem Erwärmungskörper angeordnet. Sofern ein Abschnitt des Erwärmungskörpers, vor dem CO2-Adorptionskörper angeordnet ist, sollte dieser möglichst gering bzw. dünn bzw. partiell ausgebildet sein. Dies Maßnahme hat den Vorteil, dass der zugeführte Luftstrom zunächst den CO2-Adorptionskörper erreicht, sodass bei der Desorption dieser auch vorrangig kühlt wird.

Die grundsätzliche Funktionsweise der CO2-Adsorptionsvorrichtung kann analog zu der Vorrichtung gemäß der einleitend beschriebenen WO 2015/185434 A1 erfolgen.

Die CO2-Adsorptionsvorrichtung kann demnach eine Ventileinheit aufweisen, welche mehrere Ventile aufweist und ausgebildet ist, eine geschlossene Adorptionskammer um das CO2-Adsorptionsmodul bzw. die CO2-Adsorptionsmodule für die Desorption auszubilden. Die Ventileinheit kann hierbei ein Einlassventil aufweisen, welches in einem Einlasskanal für den angesaugten Luftstrom angeordnet und ausgebildet ist, den Einlasskanal zu schließen und die Adorptionskammer stromaufwärts zu isolieren. Die Ventileinheit kann ferner ein Auslassventil aufweisen, welches in einem Auslasskanal für den CO2-reduzierten Luftstrom angeordnet und ausgebildet ist, den Auslasskanal zu schließen und die Adorptionskammer stromabwärts zu isolieren. Die Ventileinheit kann außerdem ein CO2-Ventil aufweisen, welches in einem CO2-Auslasskanal angeordnet und ausgebildet ist, den CO2-Auslasskanal zu öffnen, um das adsorbierte, d.h. gebundene/gefilterte und wieder desorbierte, d.h. freigesetzte CO2 aus der Adorptionskammer gezielt auszubringen.

Die CO2-Adsorptionsvorrichtung bzw. die Adsorptionskammer kann eine Vielzahl von CO2-Adsorptionsmodulen aufweisen.

Für die Desorption kann die CO2-Adsorptionsvorrichtung kann ferner eine Pumpeinheit aufweisen, welche ausgebildet ist, einen Unterdruck in der Adorptionskammer zu erzeugen. Des Weiteren kann die CO2-Adsorptionsvorrichtung an dem CO2-Auslasskanal eine Druckspeicheraufnahmeeinheit zur lösbaren Aufnahme eines CO2-Druckspeichers aufweisen. Da hierfür 5-50 bar CO2-Druck erreicht werden sollten, kann die Pumpeinheit eine Hochdruckpumpe aufweisen. Somit kann die Pumpeinheit bspw. eine Kombination von Vakuumpumpe mit Kompressor aufweisen.

Verständlicherweise kann die CO2-Adsorptionsvorrichtung eine entsprechen eingerichtete Steuereinheit, insbesondere eine Steuereinheit die sich mittels Funkübertragung wie W-LAN, Bluetooth, Near-Field Communication etc. mit anderen Steuereinheiten und / oder einer zentralen Steuereinheit verbinden kann, zur Durchführung des zyklischen Adsorptions-Desorptions-Vorgangs aufweisen.

Insbesondere kann die CO2-Adsorptionsvorrichtung Teil eines Gebäude-Klimasystems bzw. in einem Klimasystem in einem Gebäude integriert sein. Hierbei kann die Adsorptionskammer der CO2-Adsorptionsvorrichtung in den Luft-Klimatisierungskreis des Gebäudes eingebunden sein, sodass der dort ohnehin vorhandene Ventilator das CO2-Adsorptionsmodul schnell herunterkühlen kann, da keine großen Wärmekapazitäten im System dämpfend wirken. Auch kann für Kühlung die Klimatisierungseinrichtung temporär kälter gestellt werden, sollte dies gesamtenergetisch vorteilhaft sein.

Ferner ist es vorteilhaft, wenn an der erfindungsgemäßen CO2-Adsorptionsvorrichtung die Modulträgereinheit Befestigungselemente, insbesondere Schienen und/oder Nuten und/oder Pins, zur Befestigung des zumindest einen elektrisch beheizbare CO2-Adsorptionsmoduls aufweist, insbesondere wobei die elektrischen Gegenanschlüsse an den Befestigungselementen angeordnet sind.

Vorteilhafterweise kann die CO2-Adsorptionsvorrichtung zumindest ein an der Modulträgereinheit befestigtes und elektrisch gekoppeltes elektrisch beheizbares CO2-Adsorptionsmodul, insbesondere zumindest ein vorangehend beschriebenes CO2-Adsorptionsmodul, aufweisen.

Analog ist hierzu es vorteilhaft, wenn bei dem erfindungsgemäßen Verfahren der zyklische Adsorptions-Desorptions-Vorgang mittels eines vorangehend beschriebenen CO2-Adsorptionsmoduls durchgeführt wird.

### Zeichnungen

Die Erfindung wird nachstehend anhand der beigefügten Zeichnungen beispielhaft näher erläutert. Es zeigen:
- Fig. 1: eine schematische Darstellung eines Gesamtsystems umfassend eine erfindungsgemäßen CO2-Abscheideeinrichtung;
- Fig. 2: eine schematische Darstellung einer erfindungsgemäßen CO2-Abscheideeinrichtung mit CO2-Adsorptionsmodulen;
- Fig. 3: eine schematische Darstellung einer Ausführungsform eines erfindungsgemäßen CO2-Adsorptionsmoduls;
- Fig. 4: eine schematische Darstellung einer weiteren Ausführungsform eines erfindungsgemäßen CO2-Adsorptionsmoduls;
- Fig. 5: eine schematische Darstellung eines gitterförmigen Erwärmungskörpers; und
- Fig. 6: ein Ablaufdiagramm eines Verfahrens zum Trennen von CO2 aus einem, insbesondere mittels einer Ventilatoreinheit, zugeführten Luftstrom.

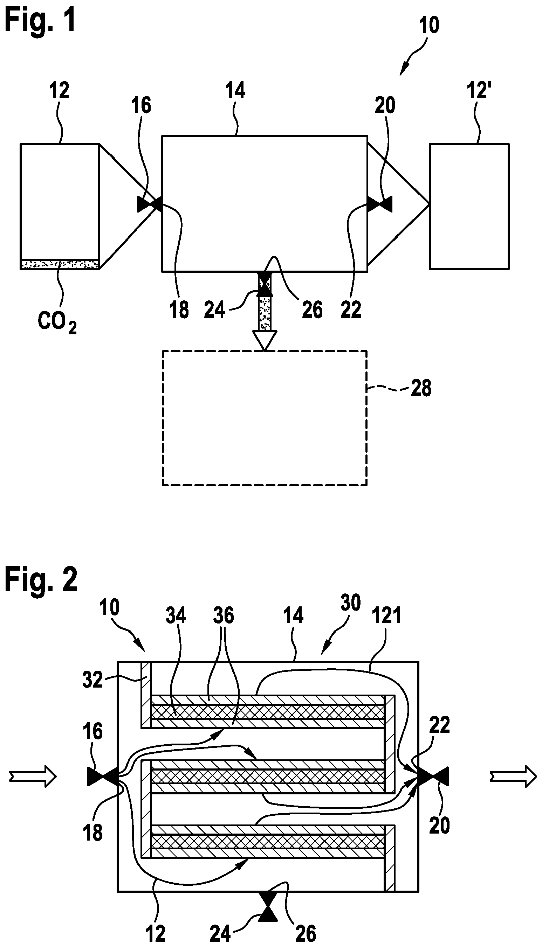

Fig. 1 zeigt eine CO2-Adsorptionsvorrichtung, welche in ihrer Gesamtheit mit der Bezugsziffer 10 versehen ist.

Die CO2-Adsorptionsvorrichtung 10 ist dazu ausgebildet, CO2 (Kohlenstoffdioxid) aus einem mittels einer (nicht gezeigten) Ventilatoreinheit, zugeführten Luftstrom 12 mittels eines zyklisch durchführbaren Adsorptions-Desorptions-Vorgangs zu trennen. Hierfür weist die CO2-Adsorptionsvorrichtung 10 eine Adsorptionskammer 14 auf.

Die Adsorptionskammer 14 weist ein Einlassventil 16 an einem Einlasskanal 18 für den angesaugten Luftstrom 12 auf, welches ausgebildet ist, den Einlasskanal 18 zu schließen und die Adorptionskammer 14 stromaufwärts zu isolieren. Die Adsorptionskammer 14 weist ferner ein Auslassventil 20 an einem Auslasskanal 22 für den CO2-reduzierten Luftstrom 12' auf, welches ausgebildet ist, den Auslasskanal 22 zu schließen und die Adorptionskammer 14 stromabwärts zu isolieren. Die Adsorptionskammer 14 weist außerdem ein CO2-Ventil 24 auf, welches in einem CO2-Auslasskanal 26 angeordnet und ausgebildet ist, den CO2-Auslasskanal 26 zu öffnen, um adsorbiertes, d.h. gebundenes/gefiltertes und wieder desorbiertes, d.h. freigesetztes CO2 aus der Adorptionskammer 14 gezielt in eine Anlage 28 zur dauerhaften CO2-Entfernung mit CO2-Konditionierung auszubringen.

In Fig. 2 ist eine detaillierte Darstellung der CO2-Abscheideeinrichtung 10 gezeigt. Hieraus ist ersichtlich, dass die CO2-Abscheideeinrichtung 10 im Inneren der Adsorptionskammer 14 CO2-Adsorptionsmodule 30 aufweist. Die Adsorptionsmodule 30 sind hierbei über (nicht gezeigte) Schienen an einer luftundurchlässigen Modulträgereinheit 32 montiert, sodass der zugeführte Luftstrom 12 zwangläufig durch die CO2-Adsorptionsmodule 30 hindurchströmt und diese als CO2-reduzierter Luftstrom 12' verlässt.

Die CO2-Adsorptionsmodule 30 weisen einen luftdurchlässigen CO2-Adorptionskörper 34 mit einem Adsorbens zur Adsorption des CO2 aus dem zugeführten Luftstrom 12 und einen luftdurchlässigen Erwärmungskörper 36 zum Erwärmen des luftdurchlässigen CO2-Adorptionskörpers 34 zur Desorption des adsorbierten CO2 auf.

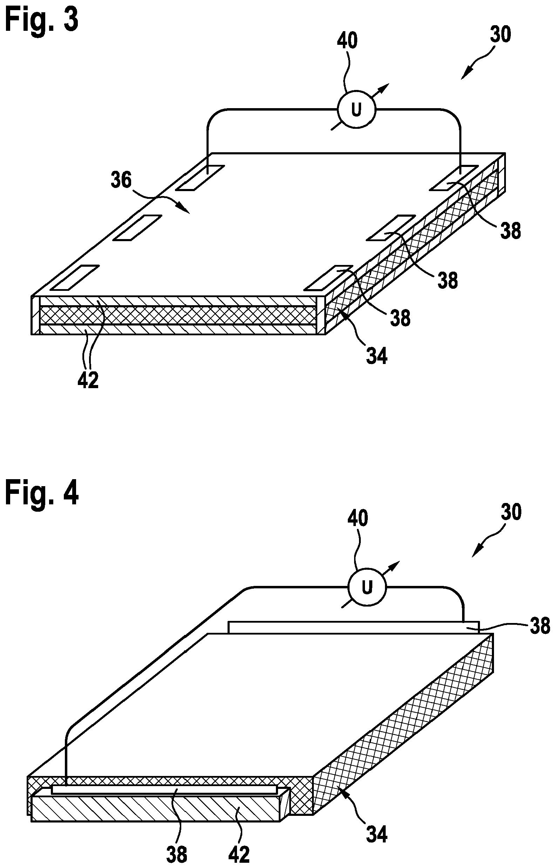

Erfindungsgemäß ist der luftdurchlässige Erwärmungskörper 36 elektrisch beheizbar ausgebildet und weist hierfür entsprechende elektrische Anschlüsse 38 auf, welche nachfolgend bei der Beschreibung der Fig. 3 und Fig. 4 näher beschrieben werden. Hierfür weisen die Schienen der Modulträgereinheit 32 jeweils elektrische Gegenanschlüsse auf, welche mit einer elektrischen Energiequelle 40 gekoppelt sind. Der luftdurchlässige Erwärmungskörper 36 weist zur elektrischen Beheizbarkeit ein elektrisch leitfähiges Polymer auf.

Der Betrieb der CO2-Adsorptionsvorrichtung 10 läuft prinzipiell wie folgt ab:
- Bei der Adsorption wird die CO2-Adsorptionsvorrichtung 10 bei Umgebungstemperatur betrieben. Der Luftstrom 12 gelangt bei geöffnetem Einlass- und Auslassventil 16, 20 an den luftdurchlässigen CO2-Adorptionskörper 34 und wird temporär gebunden.
- Steigt die Konzentration an CO2 nach dem CO2-Adorptionskörper 36 oder wird eine Höchstzeit für den Adsorptionsvorgang überschritten, wird die Desorption eingeleitet.
- Vorzugsweise werden das Einlass- und Auslassventil 16, 20 der Adorptionskammer 14 verschlossen oder die Luft wird für den Zeitraum der Desorption anders geführt. Dabei wird der Erwärmungskörper 36 elektrisch beheizt, wodurch der CO2-Adorptionskörper 34 ebenfalls erwärmt wird und das gebundene CO2 freigibt (Desorption). Dieser Vorgang kann unterstützt werden, indem das CO2-Ventil 24 geöffnet und kontinuierlich aus dem CO2-Auslasskanal 26 das freiwerdende CO2 aus der Adorptionskammer 14 abgepumpt wird. Ein geringerer Druck als bei der Adsorption kann vorteilhaft sein.
- Am Ende der Desorption soll die CO2-Adsorptionsvorrichtung 10 bzw. der Adsorptionskörper 34 schnell wieder Umgebungstemperatur erreichen. Dies ist erfindungsgemäß aufgrund der geringen Wärmekapazität des luftdurchlässigen elektrisch beheizbaren Erwärmungskörpers 36 leicht möglich, bspw. indem ein Ventilator Luft durch die Adsorptionskammer 14 fördert oder z.B. "Wind" durch die Adsorptionskammer 14 geführt wird.
- Danach startet der nächste Adsorptions-Desorptionszyklus.

In Fig. 3 und 4 sind zwei Ausführungsformen des CO2-Adsorptionsmoduls 30 näher dargestellt. In beiden Ausführungsformen besteht der luftdurchlässige Erwärmungskörper 36 zur elektrischen Beheizbarkeit aus einem elektrisch leitfähigen Polymer. Ferner ist der luftdurchlässige Erwärmungskörper 36 in beiden Ausführungsformen plattenförmig und zur Luftdurchlässigkeit perforiert ausgebildet. Des Weiteren ist der luftdurchlässige Erwärmungskörper 36 als Trägerstruktur des luftdurchlässigen CO2-Adorptionskörpers ausgebildet.

In der Ausführungsform gemäß Fig. 3 weist der Erwärmungskörper 36 zwei zueinander beabstandete Plattenkörper 42 auf, zwischen denen der luftdurchlässige CO2-Adorptionskörper 34 angeordnet ist. Demnach ist der CO2-Adorptionskörper 34 in Bezug auf den Erwärmungskörper 36 innenliegend angeordnet. Der CO2-Adorptionskörper 34 ist hierbei als Fasermatte ausgebildet.

Zur elektrischen Kontaktierung und damit Beheizbarkeit weist der Erwärmungskörper 36 an den Plattenkörpern 42 entsprechende elektrische Anschlüsse 38 auf, welche als kurze längliche Metallelemente ausgebildet und jeweils an einer Längsseite des Erwärmungskörpers 36 parallel zueinander angeordnet sind.

Im Vergleich zur Fig. 3, weist der Erwärmungskörper 36 in der Ausführungsform gemäß Fig. 4 nur einen Plattenkörper 42, um den der CO2-Adorptionskörper 34 angeordnet ist bzw. den der CO2-Adorptionskörper 34 umspannt. Demnach ist der CO2-Adorptionskörper 34 in Bezug auf den Erwärmungskörper 36 außenliegend angeordnet.

Analog zum vorhergehend beschriebenen Ausführungsbeispiel weist der Erwärmungskörper 36 zur elektrischen Kontaktierung und damit Beheizbarkeit an dem Plattenkörpern 42 entsprechende elektrische Anschlüsse 38 auf, welche als längliche Metallschienen ausgebildet und jeweils einer Schmalseite des Erwärmungskörpers 36 parallel zueinander angeordnet sind.

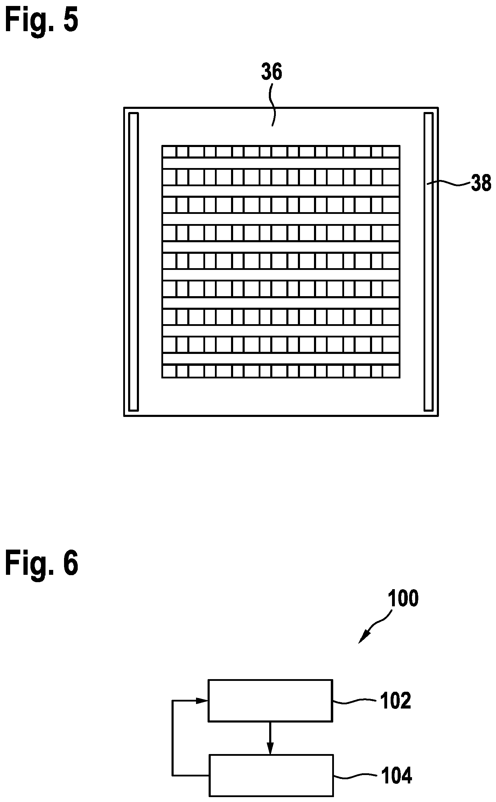

Fig. 5 zeigt einen Erwärmungskörper 36, welcher zur Luftdurchlässigkeit gitterförmig ausgebildet ist.

Fig. 6 zeigt ein Ablaufdiagramm eines Verfahrens 100 zum Trennen von CO2 aus einem, insbesondere mittels einer Ventilatoreinheit, zugeführten Luftstrom 12 mittels eines ein Adsorbens zur Adsorption des CO2 aufweisenden und zur Desorption beheizbaren CO2-Adsorptionsmoduls 30, wobei ein Adsorptionsschritt (102) und ein Desorptionsschritt (104) zyklisch durchgeführt werden, wobei im Desorptionsschritt 104 zur Desorption das CO2-Adsorptionsmodul 30 elektrisch beheizt wird.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. CO2-Adsorptionsmodul (30) für eine CO2-Adsorptionsvorrichtung (10) zum Trennen von CO2 aus einem, insbesondere mittels einer Ventilatoreinheit, zugeführten Luftstrom (12) mittels eines zyklisch durchführbaren Adsorptions-Desorptions-Vorgangs, mit einem luftdurchlässigen CO2-Adorptionskörper (34) aufweisend ein Adsorbens zur Adsorption des CO2 aus dem zugeführten Luftstrom (12) und einem luftdurchlässigen Erwärmungskörper (36) zum Erwärmen des luftdurchlässigen CO2-Adorptionskörpers (34) zur Desorption des adsorbierten CO2, **dadurch gekennzeichnet, dass** der luftdurchlässige Erwärmungskörper (36) elektrisch beheizbar ausgebildet ist und hierfür entsprechende elektrische Anschlüsse (38) aufweist.

2. CO2-Adsorptionsmodul (30) nach Anspruch 1, **dadurch gekennzeichnet, dass** der luftdurchlässige Erwärmungskörper (36) zur elektrischen Beheizbarkeit ein elektrisch leitfähiges Polymer oder ein elektrisch leitfähiges Polymerverbundmaterial aufweist.

3. CO2-Adsorptionsmodul (30) nach Anspruch 2, **dadurch gekennzeichnet, dass** das elektrisch leitfähige Polymerverbundmaterial ein, insbesondere elektrisch nichtleitendes Polymer und elektrisch leitfähige Partikel aufweist.

4. CO2-Adsorptionsmodul (30) nach einem der vorhergehenden Ansprüche, **dadurch gekennzeichnet, dass** der luftdurchlässige Erwärmungskörper (36) an seiner Oberfläche, insbesondere aufgrund des elektrisch nichtleitenden Polymers oder einer isolierenden Außenschicht, elektrisch isolierend ausgebildet ist.

5. CO2-Adsorptionsmodul (30) nach Anspruch 4, **dadurch gekennzeichnet, dass** die elektrischen Anschlüsse (38) durch definiertes Entfernen
- des elektrisch nichtleitenden Polymers an der Oberfläche bis zum Freilegen der elektrisch leitfähigen Partikel oder
- der isolierenden Außenschicht
realisiert sind.
CO2-Adsorptionsmodul (30) nach einem der vorhergehenden Ansprüche, **dadurch gekennzeichnet, dass** die elektrischen Anschlüsse ferner zur mechanischen Fixierung des CO2-Adsorptionsmoduls (30) an der CO2-Adsorptionsvorrichtung (10) ausgebildet sind.

6. CO2-Adsorptionsmodul (30) nach einem der vorhergehenden Ansprüche, **dadurch gekennzeichnet, dass** der luftdurchlässige Erwärmungskörper (36) ferner als Trägerstruktur des luftdurchlässigen CO2-Adorptionskörpers (34) ausgebildet ist, wobei der luftdurchlässige CO2-Adorptionskörper (34) an oder in dem luftdurchlässigen Erwärmungskörper (36) angeordnet, insbesondere befestigt ist.

7. CO2-Adsorptionsmodul (30) nach einem der vorhergehenden Ansprüche, **dadurch gekennzeichnet, dass** der luftdurchlässige Erwärmungskörper (36) plattenförmig ausgebildet ist.

8. CO2-Adsorptionsmodul (30) nach Anspruch 7, **dadurch gekennzeichnet, dass** der luftdurchlässige Erwärmungskörper (36)
- einen Plattenkörper (42) aufweist, an oder um der luftdurchlässige CO2-Adorptionskörper (34) angeordnet ist; oder
- zwei zueinander beabstandete Plattenkörper (42) aufweist, zwischen denen der luftdurchlässige CO2-Adorptionskörper (34) angeordnet ist.

9. CO2-Adsorptionsmodul (30) nach einem der vorhergehenden Ansprüche, **dadurch gekennzeichnet, dass** der Erwärmungskörper (36) zur Luftdurchlässigkeit gitterförmig oder lochblechförmig oder perforiert ausgebildet ist.

10. CO2-Adsorptionsvorrichtung (10) zum Trennen von CO2 aus einem, insbesondere mittels einer Ventilatoreinheit, zugeführten Luftstrom (12) mittels einer zyklisch durchführbaren Adsorptions-Desorptions-Vorgangs, mit einer Modulträgereinheit (32) zum Befestigen zumindest eines ein Adsorbens zur Adsorption des CO2 aufweisenden und zur Desorption beheizbaren CO2-Adsorptionsmoduls (30), **dadurch gekennzeichnet, dass** die Modulträgereinheit (32) elektrische Gegenanschlüsse für zumindest ein elektrisch beheizbares CO2-Adsorptionsmodul (30) aufweist und mit einer elektrischen Energiequelle (40) koppelbar ist, um das zumindest eine elektrisch beheizbare CO2-Adsorptionsmodul (30) elektrisch zu beheizen.

11. CO2-Adsorptionsvorrichtung (10) nach Anspruch 10, **dadurch gekennzeichnet, dass** die Modulträgereinheit (32) Befestigungselemente, insbesondere Schienen und/oder Nuten und/oder Pins, zur Befestigung des zumindest einen elektrisch beheizbare CO2-Adsorptionsmoduls (30) aufweist, insbesondere wobei die elektrischen Gegenanschlüsse an den Befestigungselementen angeordnet sind.

12. CO2-Adsorptionsvorrichtung (10) nach Anspruch 10 oder 11, **gekennzeichnet, durch** zumindest ein an der Modulträgereinheit (32) befestigtes und elektrisch gekoppeltes elektrisch beheizbares CO2-Adsorptionsmodul (30), insbesondere gemäß einem der Ansprüche 1 bis 9.

13. Verfahren (100) zum Trennen von CO2 aus einem, insbesondere mittels einer Ventilatoreinheit, zugeführten Luftstrom (12) mittels eines ein Adsorbens zur Adsorption des CO2 aufweisenden und zur Desorption beheizbaren CO2-Adsorptionsmoduls (30), wobei ein Adsorptions-Desorptions-Vorgang zyklisch durchgeführt wird, **dadurch gekennzeichnet, dass** zur Desorption das CO2-Adsorptionsmodul (30) elektrisch beheizt wird.

14. Verfahren (100) nach Anspruch 13, **dadurch gekennzeichnet, dass** der zyklische Adsorptions-Desorptions-Vorgang mittels eines CO2-Adsorptionsmoduls (30) gemäß einem der Ansprüche 1 bis 9 durchgeführt wird.
